(19) **Europäisches Patentamt**
**European Patent Office**
**Office européen des brevets**

(11) **EP 1 598 779 B1**

(12) **EUROPEAN PATENT SPECIFICATION**

(45) Date of publication and mention
of the grant of the patent:
**24.07.2013 Bulletin 2013/30**

(51) Int Cl.:
*G06T 5/00* (2006.01)

(21) Application number: **04102185.8**

(22) Date of filing: **18.05.2004**

(54) **Suppression of periodic variations in a digital signal.**

Beseitigung der periodischen Variationen in einem digitalen Signal

Suppression des variations périodiques d'un signal numérique

(84) Designated Contracting States:
**BE DE FR GB NL**

(43) Date of publication of application:
**23.11.2005 Bulletin 2005/47**

(73) Proprietor: **Agfa HealthCare NV**
**2640 Mortsel (BE)**

(72) Inventors:
• **Vuylsteke, Pieter**
**AGFA-GEVAERT**
**2640, Mortsel (BE)**
• **Behiels, Geert**
**AGFA-GEVAERT**
**2640, Mortsel (BE)**

(74) Representative: **Theunis, Patrick et al**
**Agfa-Gevaert N.V.**
**HE / Intellectual Property 3802**
**Septestraat 27**
**2640 Mortsel (BE)**

(56) References cited:
**US-A1- 2001 006 222     US-A1- 2002 071 600**

• **KIRSTEINS I P ET AL: "Adaptive separation of unknown narrowband and broadband time series" ACOUSTICS, SPEECH AND SIGNAL PROCESSING. PROCEEDINGS OF THE 1998 IEEE INTERNATIONAL CONFERENCE ON SEATTLE, WA, USA, NEW YORK, 12 May 1998 (1998-05-12), pages 2525-2528, XP010279739 ISBN: 0-7803-4428-6**
• **SRIVASTAVA V K ET AL: "Design of 2D-multiple notch filter and its application in reducing blocking artifact from dct coded image" PROCEEDINGS OF THE 22ND ANNUAL EMBS INTERNATIONAL CONFERENCE, vol. 4, 23 July 2000 (2000-07-23), pages 2829-2833, XP010531223**
• **KALRA MANNUDEEP K ET AL: "Can noise reduction filters improve low-radiation-dose chest CT images? Pilot study." RADIOLOGY, vol. 228, no. 1, July 2003 (2003-07), pages 257-264, XP008037451 ISSN: 0033-8419**
• **HILTS M ET AL: "Image filtering for improved dose resolution in CT polymer gel dosimetry" MEDICAL PHYSICS AIP FOR AMERICAN ASSOC. PHYS. MED USA, vol. 31, no. 1, January 2004 (2004-01), pages 39-49, XP002302931 ISSN: 0094-2405**

**Description**

FIELD OF THE INVENTION

The present invention relates to a method of suppressing periodic variations in a digital signal.
Such a method is for example applicable to a digital signal representation of an image when said digital signal representation comprises periodic variations which create artifacts in the hard copy or soft copy image.

BACKGROUND OF THE INVENTION

Robust estimation of periodic artifacts is extremely difficult.
A lot of research has been done to construct filters which only remove the periodic artifacts.
Most of these filters are not accurate at regions with high intensity gradients (edges). In these areas, most filters generate high responses.
The present invention specifically relates to an application in which an image signal is obtained by reading a radiation image that has been temporarily stored in a photo-stimulable phosphor screen. A digital signal representation of the stored radiation image is obtained by scanning the plate with stimulating radiation and converting the image wise modulated light which is emitted by the plate upon stimulation into a digital signal representation.
The image-wise light emitted upon stimulation is focussed by means of an array of microlenses onto an array of transducers converting light into an electric signal.
Because an imaging plate such as a photo-stimulable phosphor screen has a varying thickness, several positions of the imaging plate are out of focus with respect to the microlens array.
After calibration of the received signal, the areas where the imaging plate was out of focus contain some periodic variation with the same period of the microlens array.
The period of a microlens array is defined as the width of one microlens in the microlens array.
When analyzing the Fourier spectrum of the received signal, peaks are observed in the Fourier spectrum at the frequency $F$ of the microlens array and the harmonics, $F_n = nF$, $n =1,2,3,...$ for a microlens with a width of $T = {}^1\!/_F$ pixels. Many filters can be constructed to suppress periodic variation of this nature. However, they all have to be tuned carefully to ensure the removal of only the periodic variation.
In a similar manner, a filter can be constructed which extracts the periodic variation from the signal. This periodic estimation will contain extra erroneous information.
The publication "Adaptive separation of unknown narrowband and broadband time series" (1998), Kirsteins, I.P., et al., Acoustics, speech and signal processing , pp. 2525 -2528 discloses filtering a digital signal to obtain a suppression signal representing the periodic variation of said digital signal.

SUMMARY OF THE INVENTION

To overcome the above-mentioned disadvantages the present invention provides a method of suppressing periodic variations in a digital signal as set out in claim 1.
Specific features for preferred embodiments of the invention are set out in the dependent claims.
Applying the method of the present invention makes a designed filter more robust against the above-mentioned drawback and makes the result of applying the filter more periodic.
Further advantages and specific embodiments of the present invention will become apparent from the following description and drawings.

BRIEF DESCRIPTION OF THE DRAWINGS

Figure 1 shows the signal read out from a uniformly exposed imaging plate before calibration,
Figure 2 shows the signal read from a uniformly exposed imaging plate after having been subjected to signal calibration,
Figure 3 shows the signal read from a uniformly exposed imaging plate placed out of focus,
Figure 4 shows the calibrated signal of a uniformly exposed imaging plate placed out of focus,
Figure 5 shows part of the magnitude of the Fourier transformed calibrated signal of a uniformly exposed imaging plate placed out of focus,
Figure 6 shows part of the magnitude of the Fourier transformed calibrated signal of a uniformly exposed imaging plate placed in focus,

Figure 7 displays the position of the correction algorithm in the image flow,
Figure 8 shows the scale parameters that are applied to the Fourier transformed calibrated input signal,
Figure 9 shows the corresponding convolution kernel in the spatial domain of the scale parameters defined in Equation (2),
Figure 10 shows a flow chart of the suppression method,
Figure 11 shows the corrected signal of a uniformly exposed imaging plate placed out of focus using the method depicted in Figure 10,
Figure 12 shows the suppression signal used to suppress the periodic variation of the signal displayed in figure 4,
Figure 13 shows a sample diagnostic signal,
Figure 14 shows the suppression signal of the method of figure 13,
Figure 15 applied to the input signal of figure 14 after applying a median filter with the same period as the periodic variation,
Figure 16 shows the suppression signal of figure 14 suppression signal after applying a median filter with the same period as the periodic variation,
Figure 17 shows the block diagram of the method according to the present invention for processing one-dimensional signals,
Figure 18 shows the block diagram of an implementation of the invented algorithm for processing two-dimensional signals.

## DETAILED DESCRIPTION OF THE INVENTION

The present invention will be described with reference to digital medical imaging, more specifically with reference to a computed radiography system as described below.

In computed radiography a digital signal representation of a radiographic image is read out of a photo-stimulable phosphor screen that has been exposed to a radiation image.
The digital signal representation is obtained by scanning the exposed photo-stimulable phosphor screen with stimulating radiation and by converting image-wise modulated light which is emitted by the screen upon stimulation into an electric signal representation. The electric signal representation is then digitized.

In such a system for reading a radiation image out of a photo-stimulable phosphor screen an array of microlenses may be used for collecting the image-wise modulated light which is emitted upon stimulation of the screen.

An example of such a read out system integrated in a cassette conveying the photo-stimulable phosphor screen has been described for example in US2003/0111620 and in US 6,642,535.

Microlenses can for example be obtained from LIMO-Lissotschenko Mikrooptik GmbH, Hauert 7, 44227 Dortmunt, Germany.

Although the invention will be described with reference to a read out system using an array of microlenses, the principal of the invention also works for signals containing periodic variation originated by other features.

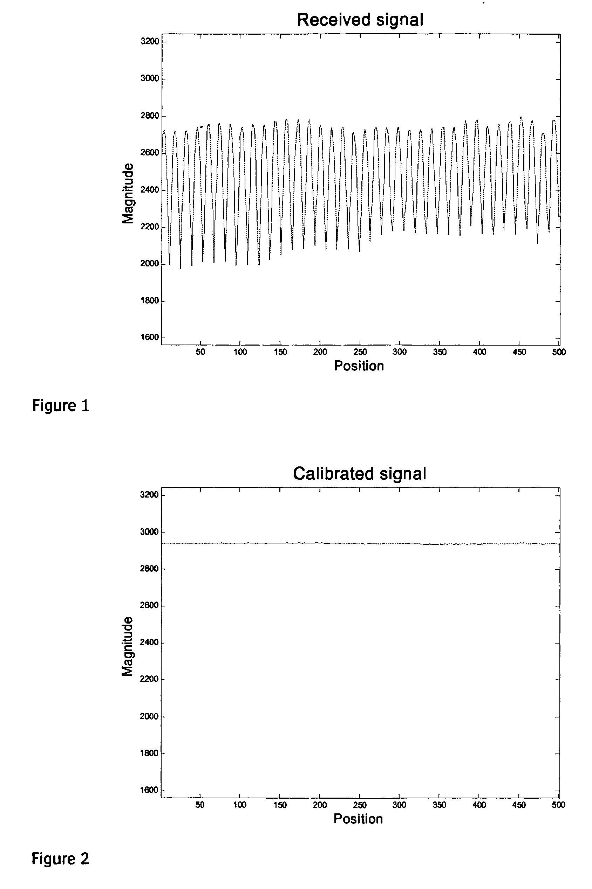

Light collected with a microlens array shows a periodic variation with the same period as the microlens elements in the microlens array (Figure 1). The period of a microlens array is defined as the width of an individual microlens element in a microlens array.

After calibration with measured gain values, the received signal is transformed to a more homogeneous and constant signal (Figure 2).

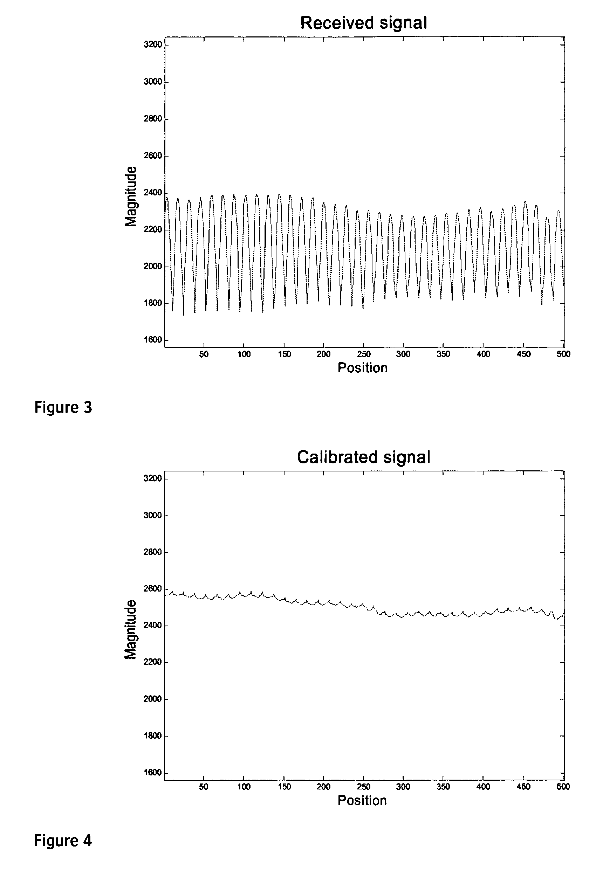

If an emitting light source is placed out of focus (which occurs when due to varying thickness of the photo-stimulable phosphor screen several positions of the screen are out of focus with regard to the microlens array) (Figure 3) the calibrated signal is not homogeneous and contains period variation (Figure 4).

This periodic variation is of a multiplicative nature. If C is the calibrated signal, we define

$$S = \log C$$

to convert the multiplicative problem to an additive problem.

If $S_c$ is the corrected signal of $S$ after applying the necessary correction steps described in the following sections, the corrected signal is converted using

$$R = \exp S_c$$

to obtain the resulting signal R.

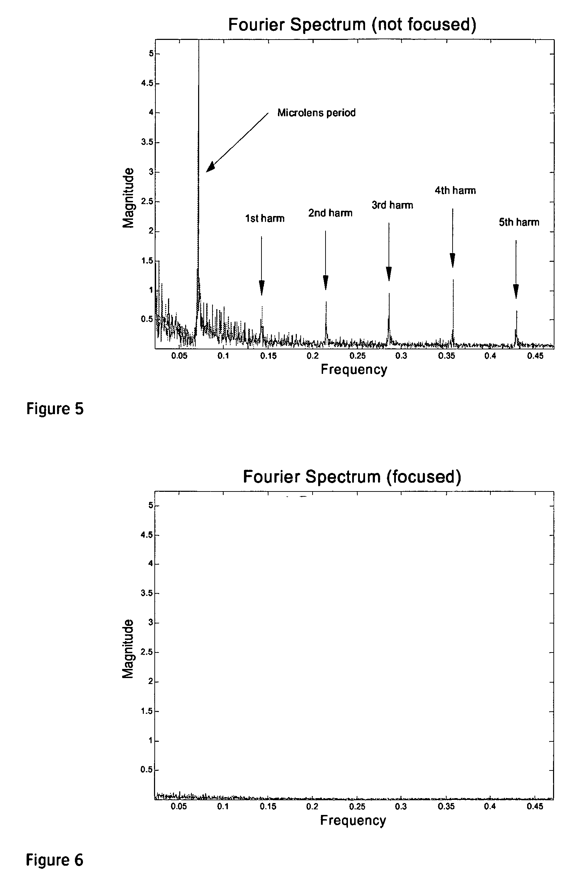

Fourier analysis of the calibrated signals **S** indicates peaks at the frequency F of the microlens and the harmonics (Figure 5). These spectral peaks are not present in a signal collected from a focused imaging plate (Figure 6).

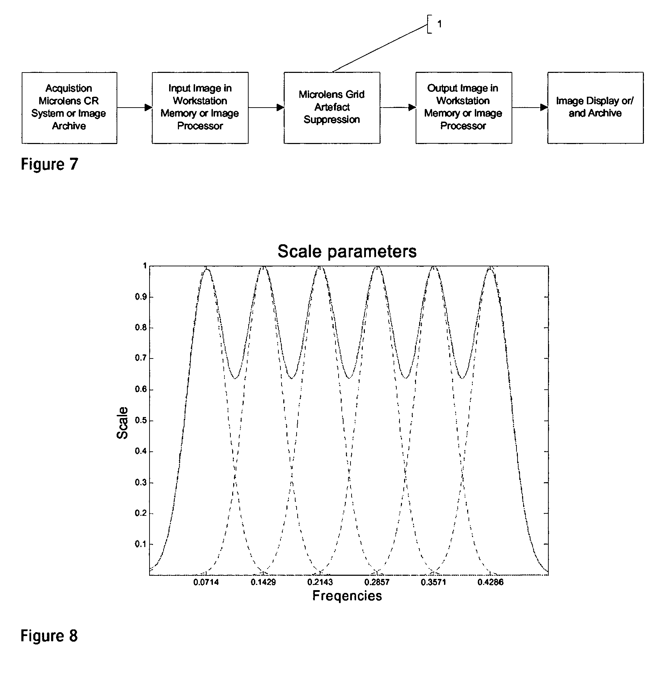

Figure 7 shows the general flow that will be followed to suppress the described periodic variation. A digital signal representation of an image is obtained by a computed radiography system as described higher or is retrieved from an archive system in case the image representation was generated earlier. Next, the image representation is applied to a work station or an image processing unit where the artefact suppression method according to the present invention is applied. Next, the corrected image representation is displayed or archived.

From the Fourier analysis of Figure 5, it is clear that most of the information of the periodic variation in the Fourier domain is centered on its frequency and its harmonics. To extract this information, parameters are computed which are used to multiply with the previously computed Fourier spectrum. If $S_f$ is the Fourier transform of the calibrated signal $S$, $S_f$ is multiplied with $W$, where W are scale parameters.

$$S_f = \Im(S)$$
$$P_f = W \; S_f \tag{1}$$

$\Im$ denotes the Fourier transform. For this particular application, $W$ is defined as

$$W_s = \sum_{i=-n_h}^{n_h} \sum_{j=-\infty}^{\infty} e^{-\frac{(j-iF)^2}{2\sigma^2}} \tag{2}$$
$$W = \frac{W_s}{\max W_s}$$

with $F = {}^1/_{14}$, $n_h = 5$ and $\sigma = {}^F/_3$.

However, the choice of W is not critical and any suitable set of scale parameters may be used.

Figure 8 shows the scale parameters for $i=1...5$. Equations (1) and (2) are easily extended to two-dimensions for processing of 2D-images.

If it is assumed that $P_f$ is the Fourier transform of the correct period variation, the suppressed signal $S_c$ is obtained from

$$S_c = \Im^{-1}(\Im(S) - W \Im(S))$$
$$S_c = S \otimes \Im^{-1}(1 - W) \tag{3}$$
$$S_c = S - S \otimes \Im^{-1}(W)$$

The assumption that $\Im^{-1}(P_f)$ or $S \otimes \Im^{-1}(W)$ is the correct periodic variations is not entirely correct (see below).

The convolution kernel

$$K = \Im^{-1}(W)$$

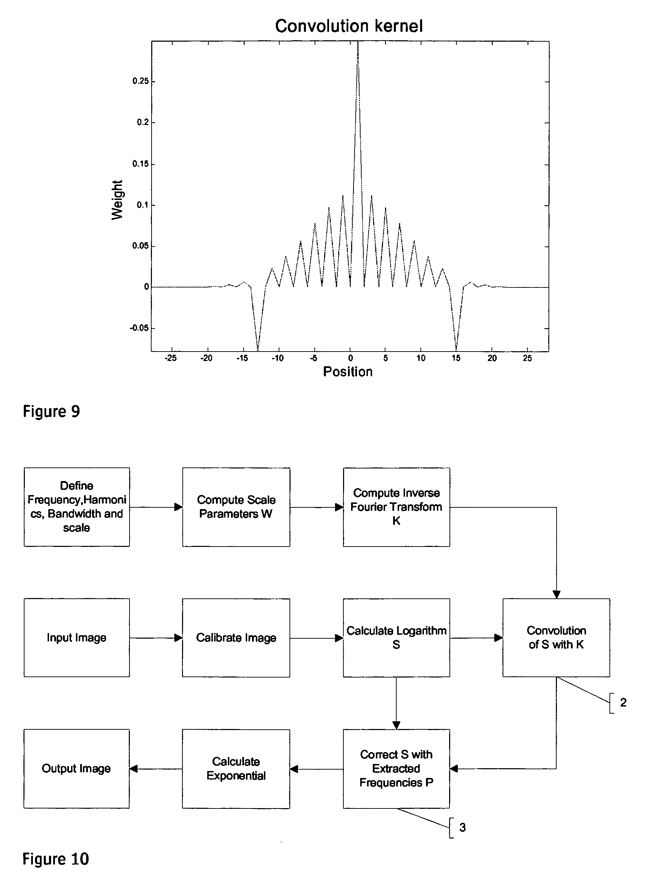

is displayed in Figure 9.

When applying the last form of Equation (3), the microlens grid artifact suppression block in figure 7 transforms to the flowchart in figure 10.

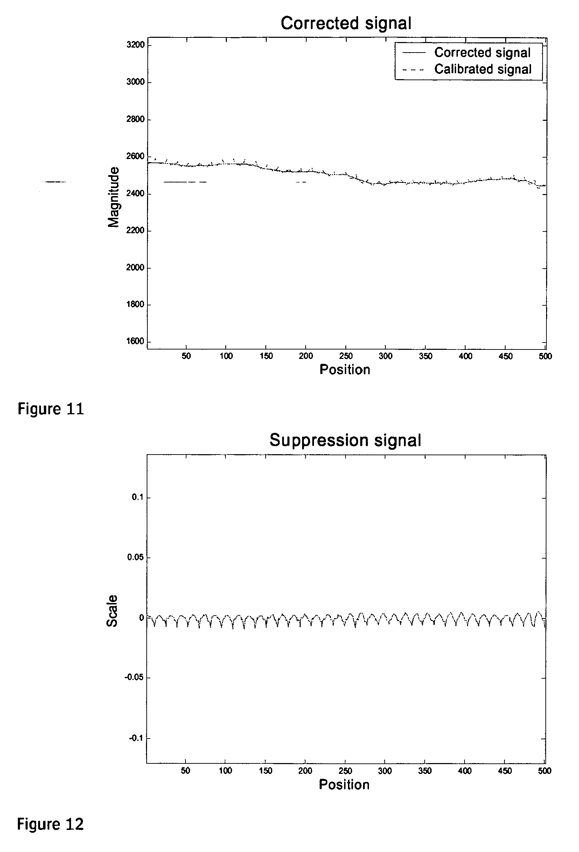

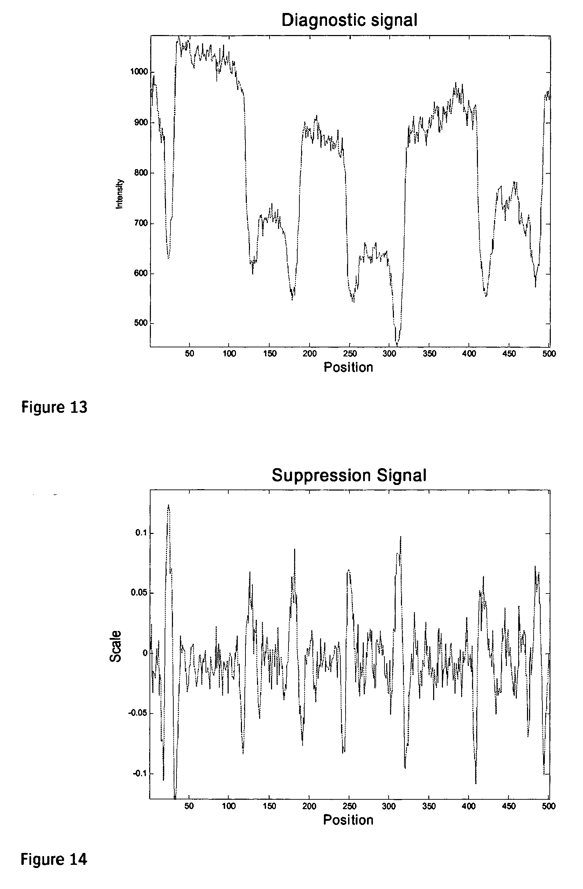

The correction algorithm applied to the signal of figure 4 is displayed in figure 11.
Figure 12 shows the suppression signal. This is signal is relatively constant and periodic of nature.
If the method of the present invention would be applied to a real diagnostic signal (Figure 13) more than the periodic variation would be filtered out (Figure 14).
This effect cannot be resolved by careful tuning of the parameters or choosing a different filter.
To solve this problem, a post-processing filter is applied to the response of the high-pass frequency filter

$P = S \circledast \mathfrak{S}^{-1}(W)$ of equation (3).

The post processing filter is designed in such a way that the filter has the same period as the period of the variation to be removed.
If the signal has period **T**, this maps to separating the signal into **T** signals where the pixels have a corresponding phase.

$$\forall i \in [0, T[ : P^i = (p_i, p_{i+T}, p_{i+2T}, p_{i+3T}, \ldots)$$

where $p_i$ is the $i^{\text{th}}$ element of the extracted periodic variation **P**.
For each signal $P^i$, a high frequency attenuating filter is applied. To filter the vertical stripes originated in a microlens digitizer system, a median filter is chosen of a certain size $k$. The choice of $k$ is not critical. It needs to be large enough to filter all reoccurring erroneous filter responses and small enough to adapt itself to varying thickness of the emitting imaging plate. A kernel that is too large however, can have significant impact on execution times and may be too robust for changes in thickness of the imaging plate. A suitable size for processing diagnostic images is found to be 7.
Known image processing techniques can be used to compute the median elements at the border of the signal. Extension of the signal at its both ends with a mirrored version of the signal with the size of the filter kernel eliminates the filter edge effect mostly. Dependent on the variance of the input signal, one can think of varying schemes to automatically determine the size of the median kernel or low pass filter to make the filter more robust for varying input signals.
After post-processing of the filter responses $P^i$, the filtered version of the suppression signal P is reconstructed:

$$P_c = \left( p_0^{0'}, p_0^{1'}, \ldots, p_0^{T-1'}, p_1^{0'}, p_1^{1'}, \ldots, p_1^{T-1'}, p_2^{0'}, p_2^{1'}, \ldots, p_2^{T-1'}, \ldots \right)$$

where $p_j^{i'}$ is the $j^{\text{th}}$ element of $P^i$, the post-processed filter response $P^i$.

and the corrected signal is computed:

$$S_c' = S - P_c$$

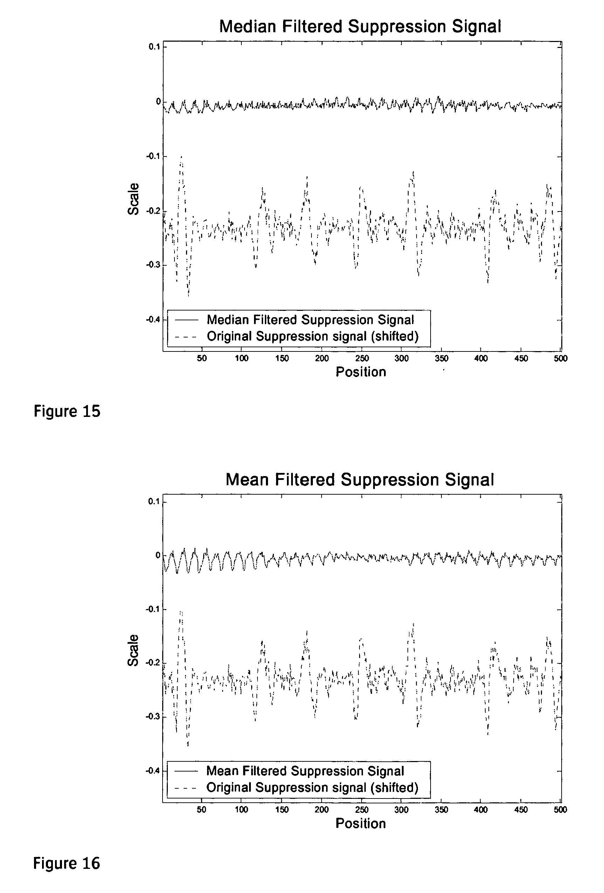

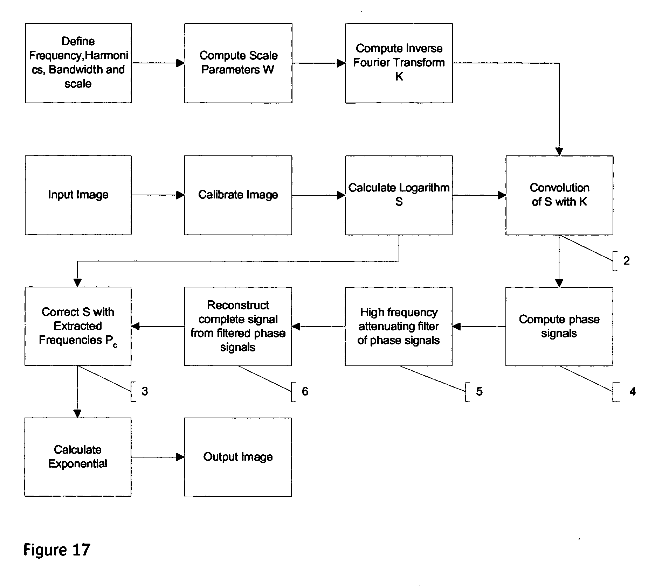

An example of the suppression signals **P** and median filtered suppression signal $P_c$ for the diagnostic input signal, given in figure 13, is shown in figure 15. Figure 16 shows a mean filtered version of the filter responses $P^i$.
If the post processing low pass filter is placed between blocks 2 and 3 of the algorithm in figure 9, the correction algorithm is changed to the version depicted in figure 17. To reduce memory consumption and overhead of copying the data, a virtual repartitioning and reconstruction of the signal can be implemented while filtering the data. This reduces blocks 4,5 and 6 to one block.
The algorithm of figure 17 is easily extended to two dimensions by extension of the suppression scale parameters in the Fourier domain to two dimensions. This transforms the one-dimensional convolution to a two-dimensional convolution. If the suppression parameters in the Fourier domain are chosen carefully, one can separate the convolution. The original convolution is replaced by a convolution orthogonal to the periodic variation and a convolution parallel with the periodic variation.
In case of a digitizing system using microlenses, this maps respectively to a horizontal and vertical convolution. The post-processing step can also be extended to two dimensions to make the filter even more robust.
If we define

$$W_s = \sum_{i=-5}^{5} \sum_{j=-\infty}^{\infty} \sum_{k=-\infty}^{\infty} e^{-\frac{(j-iF)^2}{2\sigma_i^2}} e^{\frac{k^2}{2\sigma_k^2}},$$

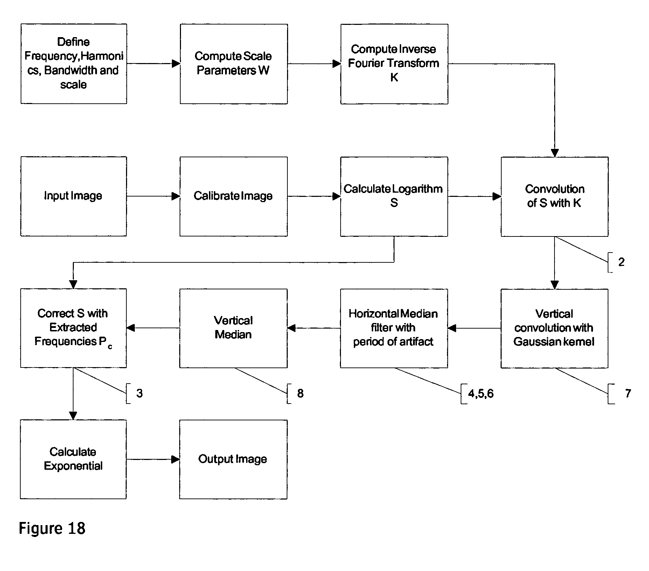

the convolution step in figure 17 is separated into a horizontal convolution with the kernel of figure 9 and a Gaussian smoothing kernel in the parallel direction. For diagnostic image processing, we choose to apply a median filter in the direction parallel with the periodic variation. The algorithm of figure 17 transforms to figure 18.

Having described in detail preferred embodiments of the current invention, it will now be apparent to those skilled in the art that numerous modifications can be made therein without departing from the scope of the invention as defined in the appending claims.

**Claims**

1.  Method of suppressing periodic variations in a digital signal comprising filtering said digital signal to obtain a suppression signal representing the periodic variation of said digital signal, **characterized by** the following steps

      - separating said suppression signal in the spatial domain into T separation signals, each of these T separation signals containing values of said suppression signal having equal phase in said suppression signal and T representing the period of a separation signal,
      - applying high frequency attenuating filtering to each of said separation signals to obtain filtered separation signals,
      - reconstructing a corrected suppression signal from said filtered separation signals,
      - correcting said digital signal by means of said corrected suppression signal.

2.  Method according to claim 1 wherein said digital signal is a two-dimensional signal representation of an image.

3.  Method according to claim 1 wherein said periodic variations originate from light-guiding by an array of microlenses and T represents the width of a microlens.

4.  Method according to claim 1 wherein said suppression signal representing said periodic variation is obtained by high pass filtering said digital signal.

**Patentansprüche**

1.  Verfahren zur Beseitigung periodischer Variationen in einem digitalen Signal, wobei das digitale Signal gefiltert wird, um ein Beseitigungssignal, das die periodische Variation des digitalen Signals darstellt, zu erhalten, **gekennzeichnet durch** folgende Schritte :

      - Auftrennen des Beseitigungssignals im räumlichen Bereich in T Trennsignale, wobei jedes dieser T Trennsignale Werte des Beseitigungssignals, die eine gleiche Phase im Beseitigungssignal aufweisen, umfasst und T die Periode eines Trennsignals darstellt,
      - Anwendung einer Hochfrequenz-Abschwächungsfilterung auf jedes der Trennsignale, um gefilterte Trennsignale zu erhalten,
      - Rekonstruieren eines korrigierten Beseitigungssignals aus den gefilterten Trennsignalen,
      - Korrigieren des digitalen Signals mittels des korrigierten Beseitigungssignals.

2.  Verfahren nach Anspruch 1, **dadurch gekennzeichnet, dass** das digitale Signal eine zweidimensionale Signaldarstellung eines Bildes ist.

3.  Verfahren nach Anspruch 1, **dadurch gekennzeichnet, dass** den periodischen Variationen eine Lichtführung mittels einer Anordnung von Mikrolinsen zugrunde liegt und T die Breite einer Mikrolinse darstellt.

4.  Verfahren nach Anspruch 1, **dadurch gekennzeichnet, dass** das Beseitigungssignal, das die periodische Variation darstellt, durch Hochpassfilterung des digitalen Signals erhalten wird.

**Revendications**

1. Procédé pour la suppression de variations périodiques dans un signal numérique, comprenant le filtrage du signal numérique afin d'obtenir un signal de suppression représentant la variation périodique du signal numérique, **caractérisé par** les étapes consistant à :

   - diviser ledit signal de suppression dans le domaine spatial en T signaux de séparation, où chacun de ces T signaux de séparation comprend des valeurs du signal de suppression ayant une phase identique dans le signal de suppression et T représente la période d'un signal de séparation,
   - appliquer un filtrage d'atténuation à haute fréquence à chacun des signaux de séparation afin d'obtenir des signaux de séparation filtrés,
   - reconstruire un signal de suppression corrigé à partir desdits signaux de séparation filtrés,
   - corriger le signal numérique à partir dudit signal de suppression corrigé.

2. Procédé selon la revendication 1, **caractérisé en ce que** ledit signal numérique est une représentation par signaux bidimensionnelle d'une image.

3. Procédé selon la revendication 1, **caractérisé en ce que** lesdites variations périodiques sont causées par le guidage de lumière assuré par un réseau de microlentilles et que T représente la largeur d'une microlentille.

4. Procédé selon la revendication 1, **caractérisé en ce que** ledit signal de suppression représentant ladite variation périodique est obtenu par filtrage passe-haut dudit signal numérique.

## Received signal

Figure 1

## Calibrated signal

Figure 2

## Received signal

Figure 3

## Calibrated signal

Figure 4

## Fourier Spectrum (not focused)

Figure 5

## Fourier Spectrum (focused)

Figure 6

[ 1

| Acquistion Microlens CR System or Image Archive | → | Input Image in Workstation Memory or Image Processor | → | Microlens Grid Artefact Suppression | → | Output Image in Workstation Memory or Image Processor | → | Image Display or/ and Archive |

**Figure 7**

## Scale parameters

**Figure 8**

## Convolution kernel

Figure 9

Figure 10

EP 1 598 779 B1

## Corrected signal

Figure 11

## Suppression signal

Figure 12

## Diagnostic signal

Figure 13

## Suppression Signal

Figure 14

## Median Filtered Suppression Signal

Figure 15

## Mean Filtered Suppression Signal

Figure 16

Figure 17

Figure 18

**EP 1 598 779 B1**

## REFERENCES CITED IN THE DESCRIPTION

**Patent documents cited in the description**

- US 20030111620 A

- US 6642535 B

**Non-patent literature cited in the description**

- **KIRSTEINS, I.P. et al.** Adaptive separation of unknown narrowband and broadband time series. *Acoustics, speech and signal processing,* 1998, 2525-2528